# EUROPÄISCHE PATENTSCHRIFT

(11) **EP 1 108 350 B1**
(45) Veröffentlichungstag und Bekanntmachung des Hinweises auf die Patenterteilung: **21.03.2007**
(21) Anmeldenummer: 00126066.0
(22) Anmeldetag: 29.11.2000
(51) Int. Cl.: A01B 45/02

(54) **Bearbeitungsgerät für die Tiefenlockerung von Böden**
Soil working implement for deep aerating
Machine de travail pour aérer le sous-sol

(30) Priorität: 15.12.1999 DE 19960515; 07.09.2000 DE 10044225
(43) Veröffentlichungstag der Anmeldung: 20.06.2001
(73) Patentinhaber: Wiedenmann GmbH, 89192 Rammingen (DE)
(72) Erfinder:
(74) Vertreter: Kastel, Stefan

(56) Entgegenhaltungen:
- WO-A-98/05191
- DE-U- 29 607 530
- US-A- 5 193 624
- US-A- 5 709 272

## Beschreibung

Die Erfindung betrifft ein Bodenbearbeitungsgerät nach dem Oberbegriff von Anspruch 1.

Die Erfindung betrifft dem nach ein fahrbares oder an ein Fahrzeug anzuschließendes Bearbeitungsgerät für die Tiefenlockerung von Böden, beispielsweise unterhalb einer Grasnarbe, durch in Fahrtrichtung beabstandet aufeinanderfolgende Einstechöffnungen mit vorzugsweise mehreren im wesentlichen senkrecht zur Fahrtrichtung aufeinanderfolgend vorgesehenen Stechwerkzeugen bzw. Werkzeughaltern für solche, deren jedes bzw. jeder in einem der Endbereiche eines Tragarmes angelenkt ist, der anderen Endes an einem Geräterahmen verschwenkbar gelagert ist, an dem eine in einer vertikalen und in Fahrtrichtung verlaufenden Ebene bewegte Antriebsstange, insbesondere eines Kurbeltriebes, angreift und an dem ein koaxial zur Anlenkachse des Werkzeuges bzw. Werkzeughaltes verschwenkbarer Einstellhebel gehalten ist, der einen auf einen außerhalb der Gelenkachse befindlichen Bereich des Werkzeugs bzw. Werkzeughalters ausgerichteten Anschlag aufweist und an dem eine Verstelleinrichtung angreift, mit der die Winkelstellung des Einstellhebels zum Tragarm und damit über den Anschlag der Einstechwinkel des Stechwerkzeuges gegenüber dem Boden bestimmbar ist, und mit einer Federeinrichtung, die einen Endes geräterahmenfest gehalten ist und anderen Endes an dem Stechwerkzeug bzw. dem Werkzeughalter in Anlage an dem Anschlag beaufschlagend angreift, wobei das Stechwerkzeug bzw. der Werkzeughalter bei Einstich in den Boden durch den dadurch gegen die Fahrtrichtung auftretenden Widerstand den Anschlag unter Spannen der Federeinrichtung verlässt.

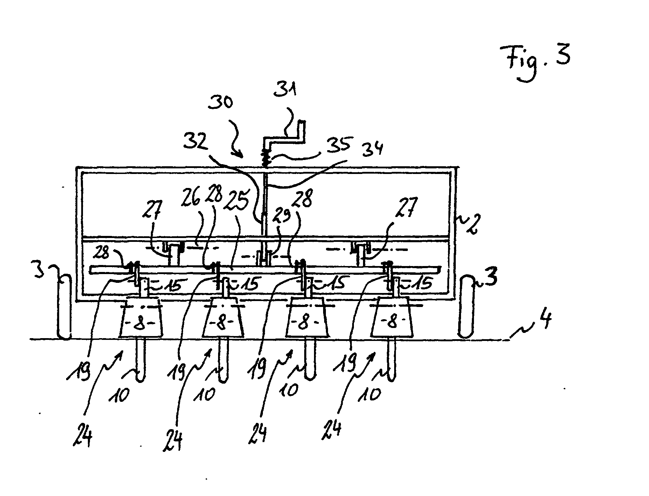

Ein Bodenbearbeitungsgerät nach dem Oberbegriff des Anspruchs 1 ist unter anderem aus der WO 98/05191 bekannt. Bei mehreren dortigen Ausführungsbeispielen ist die an dem Werkzeugträger angreifende Zugfeder anderen Endes derart an dem Rahmen gehalten - insbesondere an dem die geräterahmenseitige Lagerung des Tragarms bildenden Achsbolzen, wodurch sich die Federspannung bei Ausheben des Werkzeugs aus dem Boden und Hochführen in den oberen Totpunkt des Werkzeugs jedenfalls nicht erhöht. Damit ist die Rückführung des Werkzeugs an den Anschlag unter der Kraft der durch das Verschwenken des Werkzeugträgers bei im Boden befindlichen Stechwerkzeug nicht von der Stellung des Werkzeuges im Zuge des Bewegungszyklusses außerhalb der Einstechlage abhängig. Im übrigen arbeiten sehr viele Geräte der in Rede stehenden Art mit Federn, die an den im Arbeitszyklus bewegten Teilen ausschließlich angreifen, mit vom Bewegungszyklus unabhängiger Federspannung wie dies auch beispielsweise bei der Ausführung gemäß Figur 3 der vorgenannten WO der Fall ist.

Die US 509272 betrifft ein fahrbares oder an ein Fahrzeug anzuschließendes Bearbeitungsgerät für die Tiefenlockerung von Böden mit Stechwerkzeugen bzw. Werkzeughaltern, die im wesentlichen senkrecht zur Fahrtrichtung aufeinanderfolgend vorgesehen sind. Jedes Stechwerkzeug bzw. jeder Werkzeughalter ist an einem der Endbereiche eines Tragarmes angelenkt, der anderen Endes an einem Geräterahmen angelenkt ist. Der Tragarm ist durch eine in einer vertikalen und in Fahrtrichtung verlaufenden Ebene bewegte Antriebsstange auf und abgehend angetrieben.

Gemäß der Ausführungsform nach Fig. 4 ist ein koaxial zur Anlenkachse des Werkzeuges bzw. Werkzeughalters verschwenkbare Einstellhebel gehalten, der einen auf einen außerhalb der Gelenkachse befindlichen Bereich des Werkzeugs bzw. Werkzeughalters ausgerichteten Anschlag aufweist.

An dem Einstellhebel greift eine Verstelleinrichtung an, mit der die Winkelstellung des Einstellhebels zum Tragarm und damit über den Anschlag der Einstechwinkel des Stechwerkzeuges gegenüber dem Boden bestimmbar ist.

Eine Federeinrichtung ist einen Endes an dem Tragarm gehalten und greift anderen Endes an dem Werkzeughalter an, um diesen in Anlage an den Anschlag zu beaufschlagen. Das Stechwerkzeug und der Werkzeughalter verlässt bei Einstich in den Boden durch den dadurch gegen die Fahrtrichtung auftretenden Widerstand den Anschlag unter Spannen der Federeinrichtung. Der Anschlag weist eine stoßabsorbierende Spitze auf, um den Werkzeughalter zu kontaktieren.

Es ist bei all diesen Geräten ein besonders Anliegen, die Arbeitsgeschwindigkeit zu erhöhen, wozu es bereits eine Reihe von Bemühungen gibt, die bewegten Massen klein zu halten. Desweiteren soll hier besonders Augenmerk darauf gelegt werden, die aus dem Boden ausgehobenen Werkzeuge mit ihren Werkzeughaltern möglichst schnell und ohne lang anhaltende Prellungen an den jeweiligen Anschlag zu Ruhe zu bringen.

Hierzu wird erfindungsgemäß ein Bodenbearbeitungsgerät mit den Merkmalen des beigefügten Anspruches 1 vorgeschlagen.

Vorteilhafte Ausgestaltungen der Erfindung sind Gegenstand der Unteransprüche.

So ist die Anordnung der Federeinrichtung gemäß Anspruch 2 dergestalt getroffen, dass die zwischen der geräterahmenfesten Halterung einerseits und dem Angriff an dem Stechwerkzeug bzw. dem Werkzeughalter andererseits wirksame Federspannung in der - insbesondere höchsten - Aushebestellung des Stechwerkzeugs oberhalb des Bodens etwa gleich, vorzugsweise höher, ist als diejenige in Einstechstellung des Stechwerkzeugs im Boden, wobei diese vom Bewegungszyklus bestimmte Federspannung von der durch das Verschwenken des Stechwerkzeugs vom Anschlag fort und auf diesen zurück überlagert ist.

Durch die Halterung des geräterahmenseitigen Federanschlusses z. B. unterhalb der rahmenseitigen Schwenklagerung des Tragarms wird erreicht, dass sich die Federkraft nach Verlassen des Stechwerkzeuges aus dem Boden zumindest nicht verringert, sondern im Zuge der Aufwärtsbewegung des Stechwerkzeuges ausgehend von der Anlagestellung des Werkzeugträgers am Anschlag möglichst noch erhöht, um die Rückführung der Werkzeuge an den Anschlag zu beschleunigen und eventuelle Prellungen des Werkzeugträgers am Anschlag zeitlich zu verringen, so dass möglichst bald die "ruhige" Ausrichtung der Stechwerkzeuge in Einstechrichtung erreicht und damit das Masseverhalten im Bereich des Arbeitszyklus in Richtung konstant verbessert wird. Das hat insgesamt zur Folge, dass die Arbeitsgeschwindigkeit des Gerätes erhöht werden kann bzw. die auftretenden Rückwirkungen des Betriebsablaufs der Werkzeuge auf dem Geräterahmen geringer gehalten werden können.

Auf eine geeignete, sich möglichst erhöhende Federkraft bei Anheben der Stechwerkzeuge aus dem Boden in die obere Umkehrlage ist besonders zu achten, wenn die Werkzeuge durch die Anordnung des Tragarmes zu der an dem Einstellhebel angelenkten Einstellstange parallel verläuft und die Anlenkenden dieses Armes und der Stange ein Parallelogramm bilden. In dieser bevorzugten Ausführung, in der die Stechwerkzeuge über den gesamten Arbeitszyklus hinweg in der eingestellten Einstechwinkelstellung zum Boden ausgerichtet sind, wird der zwischen Tragarm und Einstechwerkzeug eingeschlossene Winkel mit zunehmendem Herausheben des Stechwerkzeuges aus dem Boden immer kleiner, weshalb sich der Abstand zwischen dem Angriff der Feder an dem Werkzeug bzw. Werkzeugträger und der Halterung am Rahmen nur dann nicht verringert - kleiner werden der Spannung der Zugfeder - wenn die Federeinrichtung geräterahmenseitig entsprechend deutlich unterhalb der geräteseitigen Anlenkstelle des Tragarmes liegt.

Wie im Zusammenhang mit den beiden Figuren der Zeichnung noch dargelegt wird, ist je nach konstruktiven Belangen die Anordnung der Einstellstange oberhalb oder unterhalb des zugehörigen Tragarmes wahlweise möglich, wobei die Ausgestaltung des Einstellhebels zweiarmig entweder nach oben und unten abstrebend oder aber auch vorzugsweise nur einstückig in eine Richtung abragend zu treffen ist, je nach dem, ob man den Anschlag des Einstellhebels unterhalb - wie dargestellt - oder aber auch oberhalb der Schwenkachse des Werkzeuges am Tragarm vorsehen will.

In bevorzugter Ausführung weist die Federeinrichtung wenigstens eine Zugfeder auf, grundsätzlich ist aber auch der Einsatz von Druckfedern in bekannter Anordnung möglich.

Die Verstellung des Einstechwinkels kann grundsätzlich je Stechwerkzeug oder Werkzeuggruppe durch wie auch immer erreichte Längenänderung der Einstellstange vorgenommen werden. In erfindungsgemäßer Ausführung sind mehrere, vorzugsweise alle Einstellstangen mit ihrem dem jeweils zugeordneten Einstellhebel abgewandten Ende an einem insoweit gemeinsamen Einstechwinkel-Verstellglied angelenkt, dass bevorzugt eine sich quer zur Fahrtrichtung erstreckende und um eine parallel gleichgerichtete Achse verschwenkbare Verbindungseinheit bildet, die einen Anschluss für eine zentrale Einstellhandhabe aufweist. Diese zentrale Einstellhandhabe wirkt bevorzugt gleichzeitig auf alle Einstellhebel und ist insbesondere mittels einer Handkurbel-Spindelanordnung betätigbar. Diese Verstelleinrichtung weist eine Federdämpfungseinrichtung auf, die unter Krafteinwirkung der Stechwerkzeuge bzw. Werkzeughalter auf die zugeordneten Anschläge in Federspannrichtung beaufschlagt ist. Wenn durch insoweit fehlerhafter Einwirkung des Bodens auf die Stechwerkzeuge - beispielsweise bei Rückwärtssetzen des Zug- oder Trägerfahrzeugs bei nicht ausgehobenen Stechwerkzeugen durch den Bodenwiderstand die Stechwerkzeuge beschädigt zu werden drohen, können die Anschläge an den Einstellhebeln gegen eine entsprechend hohe Kraft der Federdämpfungseinrichtung unter Mitführen der Einstellstangen und damit der Verstelleinrichtung ausweichen. Vor allem aber kann die schlagartige Beanspruchung der Einstellhebelanschläge durch die unter hoher Federspannung zurückverschwenkten Werkzeugträger in gewissem Umfang gedämpft werden, so dass auch hier der Verringerung zeitlich langer Prellbewegungen entgegengewirkt wird. Die Dämpfungsfedereinrichtung ist vorzugsweise im Bereich der Handhabe für die Winkelverstellung als Schraubendruckfeder ausgebildet.

Zwei vorteilhafte Ausgestaltungen der Erfindung sind besonders bevorzugt. Bei einer ist die Einstellstange parallel oberhalb des Tragarmes verlaufend angeordnet, wobei die Anlenkstellen vom Tragarm und Stange jeweils die Ecken eines Parallelogramms bilden und der Einstellhebel mit einem nach oben und einem nach unten gerichteten Hebelarm versehen ist. Bei der zweiten Ausgestaltung ist die Einstellstange unterhalb des Tragarms zu diesem parallel verlaufend und wiederum unter Bildung der Eckpunkte eines Parallelogramms in den Gelenkstellen angeordnet und arbeitet mit einem Einstellhebel zusammen, dessen zusammengefasste Hebelarme beide nach unten gerichtet sind, so dass dieser Hebelarm sowohl den Anschlag als auch den Angriffspunkt für die Anlenkstelle aufweist. In vergleichbarer Form konstruktiver Abänderung könnte man auch den Werkzeugträger mit einem nach oben abragenden Teil versehen, der dann mit Anschlägen von Einstellhebeln zusammenarbeitet die entweder beidarmig nach oben gerichtet oder mit entgegengerichteten Armen versehen sind, so dass wieder der Angriff einer Lenkerstange in Anordnung oberhalb oder unterhalb des Tragarmes erreicht wird.

Ausführungsbeispiele der Erfindung werden im folgenden anhand der beigefügten Figuren näher erläutert. Darin zeigt:
- Fig. 1: eine schematische Seitenansicht auf ein Bearbeitungsgerät für die Tiefenlockerung von Böden, wobei eines von mehreren Stechwerkzeugen des Bearbeitungsgerätes zur Verdeutlichung des Bewegungsablaufes in der tiefsten Einstechstellung und in der höchsten Aushebestellung dargestellt ist;
- Fig. 2: eine schematische Seitenansicht auf eine zweite Ausführungsform eines Bearbeitungsgeräts für die Tiefenlockerung von Böden, wobei eines von mehreren Stechwerkzeugen in der tiefsten Einstechstellung gezeigt ist; und
- Fig. 3: eine schematisch wiedergegebene Rückansicht einer der Fig. 1 entsprechenden Ausführungsform.

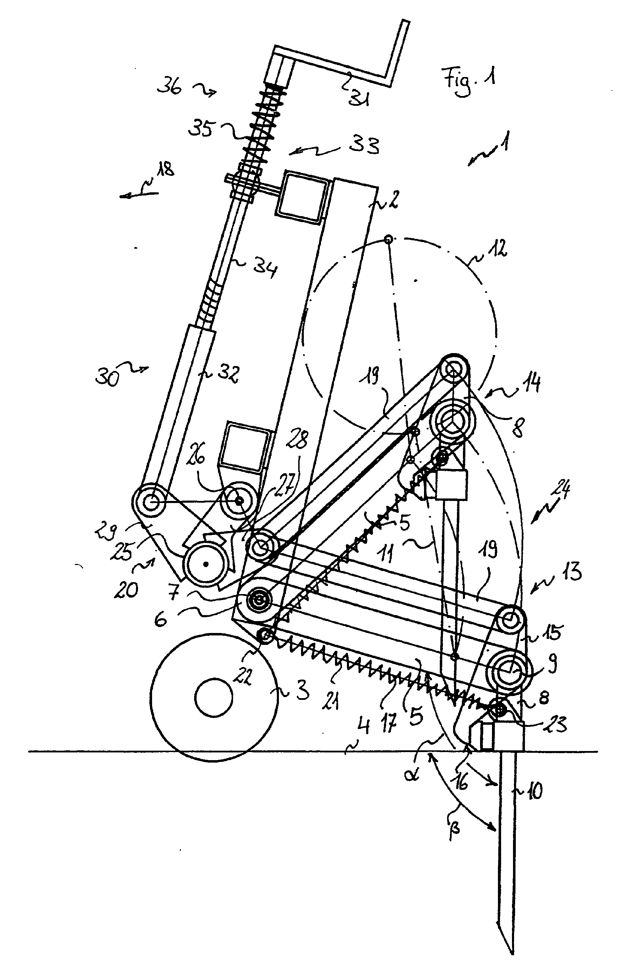

In Fig. 1 ist eine erste Ausführungsform eines an ein Fahrzeug (nicht dargestellt) anzuschließenden Bearbeitungsgeräts für die Tiefenlockerung von Böden dargestellt. Das insgesamt mit der Ziffer 1 bezeichnete Bearbeitungsgerät ist mit einem Geräterahmen 2 an das Fahrzeug anschließbar und mit einer oder mehreren Walzen bzw. einem oder mehreren Rädern 3 gegenüber dem Boden 4 abstützbar.

Ein Tragarm 5 weist an einem ersten Ende eine geräterahmenseitige Anlenkung 6 auf, an der der Tragarm 5 um eine erste Schwenkachse in einer in Fahrtrichtung 18 und in vertikaler Richtung verlaufenden Ebene schwenkbar an dem Geräterahmen 2 angelenkt ist. An dem zweiten Ende des Tragarmes 5 ist ein Werkzeughalter 8 um eine parallel zur ersten Schwenkachse 7 verlaufende Anlenkachse 9 schwenkbar angelenkt. Der Werkzeughalter 8 hält ein Stechwerkzeug 10, das zum Bilden von Einstechöffnungen, durch welche die Tiefenlockerung des Bodens 4 erfolgt, in den Boden 4 einstechbar ist.

An dem Tragarm 5 ist eine Antriebsstange 11 eines Kurbeltriebes 12 angelenkt, wodurch der Tragarm zwischen den in Fig. 1 dargestellten Endstellungen - tiefste Einstechstellung 13 und höchste Aushebestellung 14 - um die erste Schwenkachse 7 auf und ab verschwenkbar ist.

Am freien, den Werkzeughalter 8 bzw. das Stechwerkzeug10 haltenden Ende des Tragarmes 5 ist außerdem ein Einstellhebel 15 um die Anlenkachse 9 verschwenkbar gelagert. An dem Einstellhebel 15 ist ein Anschlag 16 vorgesehen, gegen welchen der Werkzeughalter 8 unter dem Einfluss einer Federeinrichtung 17 in Fahrtrichtung - nach links in der Zeichnungsebene, siehe Pfeil 18 - derart vorgespannt ist, dass der Werkzeughalter 8 mit dem Stechwerkzeug 10 entgegen der Fahrtrichtung 18 unter Einfluss der Fahrtbewegung und des Widerstandes des Bodens 4 in der Einstechstellung 13 entgegen der Vorspannung der Federeinrichtung 17 von dem Anschlag 16 um die Anlenkachse 9 schwenkend wegbewegbar ist. Am Einstellhebel 15 greift außerdem eine Einstellstange 19 einer Verstelleinrichtung 20 an.

Mittels der Verstelleinrichtung 20 ist über die Einstellstange 19 die Winkelstellung des Einstellhebels 15 und damit die Winkelstellung des Anschlages 16 einstellbar. Die Winkelstellung des Anschlages 16 gibt wiederum den Einstechwinkel β des gegen den Anschlag 16 vorgespannten Stechwerkzeuges 10 gegenüber dem Boden 4 vor. Somit ist dieser Einstechwinkel β über die Verstelleinrichtung 20 einstellbar.

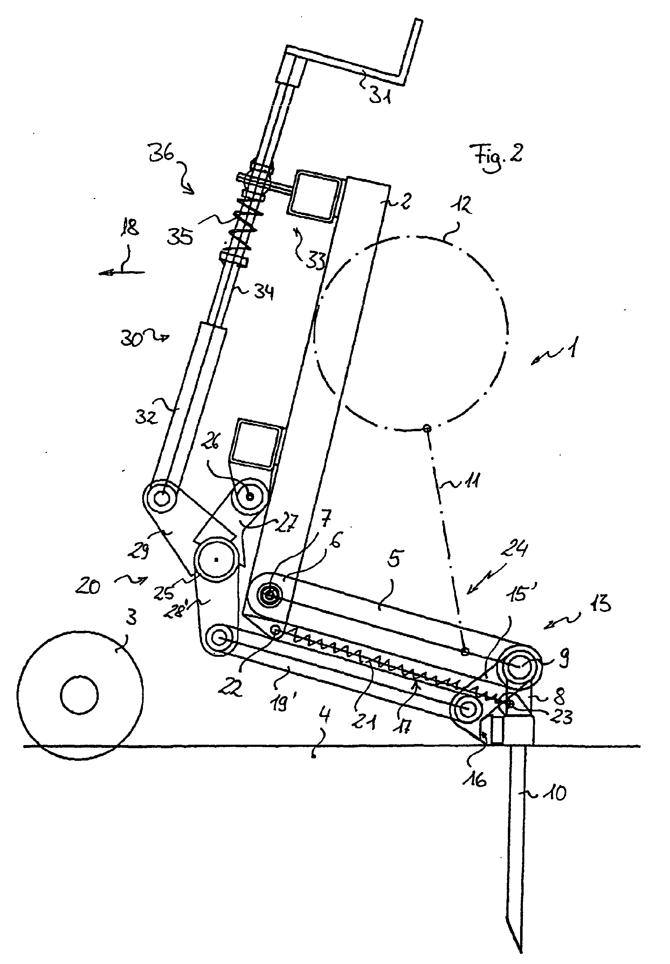

Die Federeinrichtung 17 ist mit einem Ende fest zum Geräterahmen 2 und mit dem anderen Ende an dem Werkzeughalter 8 derart gelagert, dass bei Bewegung von der Einstechstellung 13 zur Aushebestellung 14 sich die Vorspannung nicht verringert, sondern wenigstens gleich bleibt oder, wie bei dem dargestellten Ausführungsbeispiel, sogar vergrößert wird. Bei dem dargestellten Ausführungsbeispiel weist die Federeinrichtung 17 hierzu eine Schraubenzugfeder 21 auf, die an ihrem einen Ende 22 am Geräterahmen 2 an einer Stelle angelenkt ist, die sich unterhalb der Anlenkung 6 des Tragarmes 5 befindet. Mit dem anderen Ende 23 ist die Schraubenzugfeder 21 am Werkzeughalter 8 an einer Stelle unterhalb der Anlenkachse 9 angelenkt. Wenngleich in den Figuren 1 und 2 nur jeweils eine Stechwerkzeugeinheit 24 bestehend aus Stechwerkzeug 10, Einstellhebel 15 mit Anschlag 16, Tragarm 5, Schraubenzugfeder 21 und Einstellhebel 15 gezeigt ist, so sind eine ganze Reihe von solchen Stechwerkzeugeinheiten 24 quer zur Fahrtrichtung nebeneinander angeordnet vorgesehen, wie dies in dem Ausführungsbeispiel gemäß Fig. 3 zu sehen ist. Dabei ist in Fig. 3 der besseren Übersicht halber der Kurbeltrieb 12 mit den diesen jeweils mit den Stechwerkzeug 24 verbindenden Antriebsstangen 11 weggelassen. Sämtliche Stechwerkzeugeinheiten 24 lassen sich bezüglich ihres Einstechwinkels β mittels der Verstelleinrichtung 20 gemeinsam verstellen. Hierzu weist die Verstelleinrichtung 20 ein zentrales Verstellglied in Form eines sich quer zur Fahrtrichtung erstreckenden Zentralrohres 25 auf. Das Zentralrohr 25 ist an dem Geräterahmen 2 um eine Drehachse 26 schwenkbar gelagert. Hierzu ist das Zentralrohr mittels ersten radialen Auslegern 27 um die Drehachse 26 schwenkbar mit dem Geräterahmen 2 verbunden. Weiter weist das Zentralrohr 25 jeweils den Stechwerkzeugeinheiten 24 zugeordnete zweite radiale Ausleger 28 auf, an welchem das geräterahmenseitige Ende der Einstellstangen 19, welche mit ihren anderen Enden an dem Einstellhebel 15 angreifen, angelenkt sind. An dritten radialen Auslegern 29 ist dann das Zentralrohr 25 mit einer Einstellhandhabe in Form eines manuell über eine Verstellkurbel 31 antreibbaren Spindeltriebes 30 verbunden. Der die Einstellhandhabe bildende Spindeltrieb 30 ist durch eine an dem dritten Ausleger 29 angelenkte Gewindebuchse 32 und eine durch die Verstellkurbel 31 antreibbare und am Geräterahmen 2 über eine Lagereinrichtung 33 gelagerte Gewindestange 34 gebildet.

Dabei weist die Lagereinrichtung 33 ein Federelement 35 auf, über das sich die Gewindestange 34 federnd am Geräterahmen 2 abstützt. Dieses Federelement 35 ist Teil einer gemeinsam für alle Stechwerkzeugeinheiten 24 wirkenden Federdämpfungseinrichtung 36, mittels welcher Anschlagstöße beim Anschlagen der Werkzeughalter 3 gegen die Anschläge 16 gedämpft werden können und mittels welcher die Stechwerkzeuge 10 bei fehlerhafter Beaufschlagung entgegen der Fahrtrichtung 18 zur Vermeidung von Schäden ausweichen können.

Die Anordnung der Verstelleinrichtung 20, insbesondere des Zentralrohres 25 bezüglich der Drehachse 26 ist bei den dargestellten Ausführungsbeispielen derart getroffen, dass die Einstellstange 19 im wesentlichen parallel zu dem Tragarm 5 verläuft, so dass die Anlenkpunkte des Tragarmes 5 und der zugehörigen Einstellstange 19 zusammen mit dem Einstellhebel 15 etwa ein Parallelogramm bilden. Auf diese Weise ist der jeweilige Einstechwinkel β in etwa unabhängig von der jeweiligen Lage des Tragarmes 5, und der Winkel α zwischen dem an dem Einstellhebel 15 anschlagenden Stechwerkzeug 10 und dem Tragarm 5 verändert sich entsprechend der Bewegung des Tragarmes.

Für weitere, hier nicht näher erläuterte Einzelheiten wird ausdrücklich auf die WO 98/05191 verwiesen.

Die Funktionsweise des Bearbeitungsgerätes 1 ist wie folgt:

Über die Verstellkurbel 31 und den Spindeltrieb 30 lässt sich über Verschwenken des Zentralrohres 25 um die Drehachse 26 und die dadurch bedingte Bewegung der Einstellstange 19 der Einstellwinkel des Einstellhebels 15 einstellen. Da der Werkzeughalter 8 durch die Schraubenzugfeder 21 gegen den Anschlag 16 vorgespannt ist, lässt sich durch die Einstellung des Einstellwinkels des Einstellhebels 15 auch der Einstechwinkel β des Stechwerkzeuges 10 einstellen. Während des Betriebes fährt das Fahrzeug in Fahrtrichtung 18, wobei der Tragarm 5 über den Kurbeltrieb 13 und die Antriebsstange 11 zwischen den Stellungen 14 und 13 hin und her bewegt wird. Während dieser Bewegung ändert sich der Winkel β des Stechwerkzeuges 10 relativ zum Boden 4 nicht oder allenfalls geringfügig. Da das erste Ende 22 der Schraubenzugfeder 21 unterhalb der ersten Schwenkachse 7 angeordnet ist - und in den dargestellten Beispielen auch gegenüber einer Verbindungslinie zwischen der ersten Schwenkachse 7 und der Anlenkung der Einstellstange 19 an dem zweiten Ausleger 28 entgegen der Fahrtrichtung 18 weiter nach hinten versetzt ist -, vergrößert sich bei der Anhebung des Tragarmes 5 der Federweg der Schraubenzugfeder 21. Dadurch wird das Stechwerkzeug 10 bei Anhebung des Tragarmes 5 stärker gegen den Anschlag 16 vorgespannt. Gleichzeitig wird bei noch eingestochenem Stechwerkzeug 10 aufgrund der Fahrtbewegung das Stechwerkzeug 10 wegen des Widerstandes des Bodens 4 entgegen der Federspannung von dem Anschlag 16 weg um die Anlenkachse 9 nach hinten verschwenkt. Auch dies bewirkt eine Erhöhung der Federspannung der Schraubenzugfeder 21, die sich mit der Erhöhung aufgrund des Bewegungszykluses verlagert. Die resultierende erhöhte Federspannung sorgt dafür, dass das Schwenkwerkzeug 10 nach Aushub aus dem Boden 4 schneller wieder zu dem Anschlag 16 geführt wird.

Die Stöße, die beim Anschlagen gegen den Anschlag 16 erzeugt werden, werden durch das Federelement 35 abgefedert. Dieses befindet sich im Bereich der Einstellhandhabe 30, d. h. die zur Dämpfung von Stößen vorgesehene Teile werden durch den Kurbeltrieb 12 nicht mitbewegt.

In Fig. 2 ist noch eine zweite Ausführungsform des Bearbeitungsgerätes 1 gezeigt, die sich von der zuvor beschriebenen ersten Ausführungsform durch die Anordnung des Federelements 35 und durch die Anordnung der Einstellstange 19' und die Ausbildung des Einstellhebels 15' unterscheidet. Während bei der ersten Ausführungsform gemäß Fig. 1 die Einstellstange 19 oberhalb des Tragarmes 5 angeordnet ist und der Einstellhebel 15 als zweiarmiger Hebel ausgebildet ist, ist bei der in Fig. 2 gezeigten zweiten Ausführungsform die Einstellstange 19' unterhalb des Tragarmes 5 angeordnet, und der Einstellhebel 15' ist als einarmiger Hebel ausgebildet, an welchem sowohl der Anschlag 16 ausgebildet ist als auch die Einstellstange 19' angreift. Der an der Einstellstange 19' angreifende zweite Ausleger 28' des Zentralrohres 25 ist in seiner Lage der geänderten Anordnung der Einstellstange 19 entsprechend angepasst. Im übrigen wird auf die Beschreibung des ersten Ausführungsbeispiels verwiesen, wobei gleiche Bezugszeichen entsprechende Teile kennzeichnen.

Einige wesentliche Aspekte des hier beschriebenen Bearbeitungsgeräts 1 für die Tiefenlockerung von Böden werden im folgenden anhand der Darstellung gemäß Fig. 1 nocheinmal zusammengefasst:

Es ist ein fahrbares oder an ein Fahrzeug anzuschließendes Bearbeitungsgerät (1) für die Tiefenlockerung von Böden (4) beschrieben worden mit Stechwerkzeugen (10) bzw. mit Werkzeughaltern (8) für solche, welche jeweils in einem der Endbereiche eines Tragarmes (5) angelenkt sind, der anderen Endes an einem Geräterahmen (2) verschwenkbar gelagert ist. Der Tragarm (5) ist mittels eines Antriebes (12) hoch und runter beweglich. Die Winkelstellung β des Stechwerkzeuges (10) ist über eine Verstelleinrichtung (20) mit einer Einstellstange (19) und einem einen Anschlag (16) für das Stechwerkzeug (10) bietenden Einstellhebel (15) einstellbar. Das Stechwerkzeug (10) bzw. dessen Werkzeughalter (8) ist gegen diesen Anschlag (16) durch eine Federeinrichtung (17) vorgespannt. Zur Reduzierung von bewegten Massen und zum schnell zur Ruhebringen der Stechwerkzeuge (10) nach Aushebung aus dem Boden ist die Federeinrichtung (17) einen Endes geräterahmenfest angelenkt und dabei derart angeordnet und ausgebildet, dass die Federspannung bei Aushub des Stechwerkzeuges (10) aus dem Boden (4) etwa gleich bleibt oder sich erhöht.

## Patentansprüche

1. Fahrbares oder an ein Fahrzeug anzuschließendes Bearbeitungsgerät (1) für die Tiefenlockerung von Böden (4), beispielsweise unterhalb einer Grasnarbe, durch in Fahrtrichtung (18) beabstandet aufeinanderfolgende Einstechöffnungen mit, vorzugsweise mehreren, im wesentlichen senkrecht zur Fahrtrichtung (18) aufeinanderfolgend vorgesehenen Stechwerkzeugen (10) bzw. Werkzeughaltern (8) für solche, deren jedes (10) bzw. jeder (8) in einem der Endbereiche eines Tragarmes (5) angelenkt ist, der anderen Endes an einem Geräterahmen (2) verschwenkbar gelagert ist, an dem eine in einer vertikalen und in Fahrtrichtung (18) verlaufenden Ebene bewegte Antriebsstange (11), insbesondere eines Kurbeltriebes (12), angreift und an dem ein koaxial zur Anlenkachse (9) des Werkzeuges (10) bzw. Werkzeughalters (18) verschwenkbarer Einstellhebel (15, 15') gehalten ist, der einen auf einen außerhalb der Anlenkachse (9) befindlichen Bereich des Werkzeugs (10) bzw. Werkzeughalters (8) ausgerichteten Anschlag (16) aufweist und an dem eine Verstelleinrichtung (20) angreift, mit der die Winkelstellung des Einstellhebels (15, 15') zum Tragarm (5) und damit über den Anschlag (16) der Einstechwinkel (β) des Stechwerkzeuges (10) gegenüber dem Boden (4) bestimmbar ist, und mit einer Federeinrichtung (17), die einen Endes (22) geräterahmenfest gehalten ist und anderen Endes (23) an dem Stechwerkzeug (10) bzw. dem Werkzeughalter (8) in Anlage an dem Anschlag (16) beaufschlagend angreift, wobei das Stechwerkzeug (10) bzw. der Werkzeughalter (8) bei Einstich in den Boden (4) durch den **dadurch** gegen die Fahrtrichtung (18) auftretenden Widerstand den Anschlag unter Spannen der Federeinrichtung (17) verlässt,
**dadurch gekennzeichnet,**
**dass** die an den Einstellhebeln (15, 15') angreifenden Verstelleinrichtungen (20) je Einstellhebel (15, 15') eine Einstellstange (19, 19') aufweisen, deren jede (19, 19') an ihrem dem Einstellhebel (15, 15') abgewandten Ende an einem- vorzugsweise für alle Stechwerkzeuge (10) bzw. Werkzeughalter (8) gemeinsamen, zentralen - Einstechwinkel-Verstellglied (25) angelenkt ist, und
**dass** die Verstelleinrichtung (20) eine Federdämpfungseinrichtung (36) aufweist, die unter Krafteinwirkung der Stechwerkzeuge (10) bzw. Werkzeughalter (8) auf die zugeordneten Anschläge (16) in Federspannrichtung beaufschlagt ist.

2. Bearbeitungsgerät nach Anspruch 1,
**gekennzeichnet durch**
die Anordnung der Federeinrichtung (17) dergestalt, dass die zwischen der geräterahmenfesten Halterung (22) einerseits und dem Angriff (23) an dem Stechwerkzeug (10) bzw. dem Werkzeughalter (8) andererseits wirksame Federspannung in der - insbesondere höchsten - Aushebestellung (14) des Stechwerkzeugs (10) oberhalb des Bodens (4) etwa gleich, vorzugsweise höher, ist als diejenige in Einstechstellung (13) des Stechwerkzeugs (10) im Boden (4), wobei diese vom Bewegungszyklus bestimmte Federspannung von der **durch** das Verschwenken des Stechwerkzeugs vom Anschlag fort und auf diesen zurück bestimmten Federspannung überlagert ist.

3. Bearbeitungsgerät nach Anspruch 2,
**dadurch gekennzeichnet,**
**dass** die Federeinrichtung (17) wenigstens eine Zugfeder, insbesondere Schraubenzugfeder (21), aufweist, die geräterahmenseitig unterhalb der Anlenkung (6) des Tragarmes (5) gehalten ist.

4. Bearbeitungsgerät nach einem der Ansprüche 1 bis 3,
**dadurch gekennzeichnet,**
**dass** das Einstechwinkel-Verstellglied eine sich quer zur Fahrtrichtung (18) erstreckende und um eine gleichgerichtete Achse (26) verschwenkbare Verbindungseinheit (25) ist, die für den Anschluss an die Einstellhebel (15, 15') mit radialen Auslegern (28) versehen ist und einen Anschluss (29) für eine zentrale Einstellhandhabe (30) aufweist.

5. Bearbeitungsgerät nach einem der Ansprüche 1 bis 4,
**dadurch gekennzeichnet,**
**dass** die Einstellhandhabe (30) auf alle Einstellhebel (15, 15') gleichzeitig wirkend, insbesondere mittels einer Handkurbel-Spindelanordnung, betätigbar ist.

6. Bearbeitungsgerät nach einem der Ansprüche 1 bis 5,
**dadurch gekennzeichnet,**
**dass** die Federdämpfungseinrichtung (36) als für alle Einstellhebel (15, 15') bzw. Einstellstangen (19, 19') gemeinsam wirkende Feder (35) im Bereich der Einstellhandhabe (30) vorgesehen ist.

7. Bearbeitungsgerät nach Anspruch 5 oder 6,
**dadurch gekennzeichnet,**
**dass** die Federdämpfungseinrichtung (36) als Schraubenfeder (35) ausgebildet und die Spindelschaft (34) der Einstellhandhabe (30) umgreifend angeordnet ist.

8. Bearbeitungsgerät nach einem der voranstehenden Ansprüche,
**dadurch gekennzeichnet,**
**dass** der Tragarm (5) eines jeden Stechwerkzeugs (10) bzw. Werkzeugträgers (8) und die einen Endes an dem zugehörigen Einstellhebel (15, 15') und anderen Endes geräterahmenseitig, insbesondere über eine zwischengeschaltete Verstelleinrichtung (20), angelenkte Einstellstange (19, 19') im wesentlichen parallel verlaufend angeordnet sind und dass die Anlenkpunkte des Tragarmes (5) und der zugehörigen Einstellstange (19, 19') etwa ein Parallelogramm bilden, so dass die jeweils eingestellte Einstechwinkellage (β) der Stechwerkzeuge (10) gegenüber dem Boden (4) über deren gesamten Bewegungszyklus (13 - 14 - 13) gesehen im wesentlichen gleich bleibt.

9. Bearbeitungsgerät nach Anspruch 8,
**dadurch gekennzeichnet,**
**dass** die Einstellstange (19) oberhalb oder unterhalb (19') des Tragarmes (5) jeweils etwa parallel verlaufend angeordnet ist und dass der jeweils zugehörige Einstellhebel (15) mit einem nach unten und einem nach oben abragenden Hebelarm oder mit zwei in gleicher Richtung abragenden vorzugsweise einstückigen Hebelarmen (15') ausgebildet ist.

## Claims

1. Ground working machine (1) which can be driven or coupled to a vehicle, for in-depth loosening of soil (4), for example under a covering of turf, by means of perforating openings arranged in succession at a spacing from one another in the direction of travel (18), with, preferably several, perforating tools (10) provided one after the other, substantially perpendicularly to the direction of travel (18), or tool holders (8) for such tools (10), each tool (10) or tool holder (8) being articulated in one of the end regions of a carrying arm (5), which is pivotably mounted, at the other end, on a frame (2) of the machine, on which a driving rod (11), particularly a crank drive (12) moving in a plane extending vertically and in the direction of travel (18), engages, and on which is held an adjustment lever (15, 15') pivotable coaxially with the articulation axis (9) of the tool (10) or tool holder (18), said lever comprising a stop (16) aligned with a region of the tool (10) or tool holder (8) which is located outside the articulation axis (9), and on which a setting device (20) acts by means of which the angular position of the adjustment lever (15, 15') to the carrying arm (5) and hence, via the stop (16), the angle of penetration (β) of the perforating tool (10) relative to the ground (4) can be determined, and with a spring device (17) which at one end (22) is secured to the frame of the machine and at the other end (23) comes to bear on the perforating tool (10) or on the tool holder (8) abutting on the stop (16), wherein as the perforating tool (10) or the tool holder (8) penetrates the ground (4) it moves away from the stop as a result of the resistance thus presented counter to the direction of travel (18), thereby tensioning the spring device (17), **characterised in that** the setting device (20) acting on the adjustment levers (15, 15') comprises, for each adjustment lever (15, 15'), an adjustment rod (19, 19') each of which (19, 19') is jointed, at its end remote from the adjustment lever (15, 15'), to a penetration angle adjusting member (25) which is preferably central and common to all the perforating tools (10) or tool holders (8), and **in that** the setting device (20) comprises a spring damping device (36) which is acted upon under the effect of the force of the perforating tools (10) or tool holders (8) on the associated stops (16) in the direction of spring bias.

2. Ground working machine according to claim 1, **characterised in that** the spring device (17) is arranged such that the spring tension acting between the holder (22) secured to the frame, on the one hand, and the point of engagement (23) on the perforating tool (10) or on the tool holder (8), on the other hand, in the, more particularly, highest, position (14) of elevation of the perforating tool (10) above the ground (4) is substantially the same as, preferably higher than, the spring tension in the position of penetration (13) of the perforating tool (10) in the ground (4), this spring tension determined by the cycle of movement being overlaid with the spring tension determined by the pivoting of the perforating tool away from the stop and back towards it.

3. Ground working machine according to claim 2, **characterised in that** the spring device (17) has at least one tension spring, particularly a helical tension spring (21), which is secured to the machine frame underneath the articulation (6) of the carrying arm (5).

4. Ground working machine according to one of claims 1 to 3, **characterised in that** the penetration angle adjusting member is a connecting unit (25) which extends transversely with respect to the direction of travel (18) and is pivotable about a spindle (26) running in the same direction, said unit (25) being provided with radial extension arms (28) for attachment to the adjustment levers (15, 15') and having a connection (29) for a central adjusting handle (30).

5. Ground working machine according to one of claims 1 to 4, **characterised in that** the adjusting handle (30) can be actuated, particularly by means of a handwheel spindle arrangement, so as to act on all the adjustment levers (15, 15') simultaneously.

6. Ground working machine according to one of claims 1 to 5, **characterised in that** the spring damping device (36) is provided as a spring (35) in the region of the adjusting handle (30), acting for all the adjustment levers (15, 15') or adjusting rods (19, 19') together.

7. Ground working machine according to claim 5 or 6, **characterised in that** the spring damping device (36) is constructed as a helical spring (35) and is arranged so as to surround the spindle shank (34) of the adjusting handle (30).

8. Ground working machine according to one of the preceding claims, **characterised in that** the carrying arm (5) of each perforating tool (10) or tool holder (8) and the adjusting rod (19, 19') which is jointed at one end to the associated adjustment lever (15, 15') and at the other end to the machine frame, particularly via an intermediate setting device (20), are arranged so as to run substantially parallel to one another, and **in that** the articulation points of the carrying arm (5) and of the associated adjusting rod (19, 19') roughly form a parallelogram, so that the angle of penetration (β) of the perforating tools (10) relative to the ground (4) remains substantially constant when viewed over the entire cycle of movement thereof (13- 14- 13).

9. Ground working machine according to claim 8, **characterised in that** the adjusting rod (19) is arranged above or below (19') the carrying arm (5), extending substantially parallel thereto, and **in that** the associated adjustment lever (15) is formed with one lever arm projecting downwards and one projecting upwards or with two preferably one-piece lever arms (15') projecting in the same direction.

## Revendications

1. Engin de traitement (1), mobile ou attachable à un véhicule, aérant le sous-sol (4), par exemple d'une pelouse, par trous d'aération écartés les uns dès autres en direction du sens de la marche (18), utilisant au mois un et de préférence une multitude d'outils de perforation (10) ou de porte-outils (8) pour ceux-ci prévus d'être orienté orthogonalement au sens de la marche (18) en se suivant et dont chacun (10, 8) est lié par articulation à l'une des sections du bout du bras portant (5), l'autre bout duquel est en liaison pivotante avec un bâti d'engin (2), qui est entamé par une barre de commande (11), notamment une commande à bielle ou manivelle (12), et auquel est tenu coaxialement à l'axe de pivotement (9) de l'outil (10) ou du porte-outil (8) un levier de commande (15, 15') pivotant qui comporte un arrêt (16) étant orienté vers une zone de l'outil (10) ou du porte-outil (8) extérieure à l'axe de pivotement (9) auquel est engagé un dispositif de réglage (20), à l'aide duquel la position angulaire du levier de commande (15, 15') par rapport au bras portant (5) et ainsi par intermédiaire de l'arrêt (16) l'angle de perforation (β) de l'outil de perforation (10) par rapport au sol (4) est réglable et avec un dispositif élastique (17) solidarisé au bâti d'un premier bout (22) et attenant à force à l'arrêt (16) à l'outil de perforation (10) ou au porte-outils (8) d'un deuxième bout (23), tel que l'outil de perforation (10) ou le porte-outil (8) quitte l'arrêt (16) en serrant le dispositif élastique (17) lors de la perforation du sol (4) à cause de la résistance en direction du mouvement (18), **caractérisé** an ce que les dispositifs de réglage (20) engagés aux leviers de commande (15, 15') comportent un axe de réglage (19, 19') dont chacun est engagé de façon pivotante à un élément de réglage de l'angle de perforation (25), dont existe de préférence un en commun à tous les outils de perforation (10) ou porte-outils (8), avec son extrémité détourné, et en ce que le dispositif de réglage (20) comporte un amortisseur à ressort (36) accouplé par la force des outils de perforation (10) ou des porte-outils (8) contre les arrêts (16) associés en direction de serrage.

2. Engin de traitement (1) selon la revendication 1, **caractérisé par** une disposition du dispositif élastique (17) tel que la tension effective entre le crochet (22) solidaire au cadre d'une part et l'attaque (23) à l'outil de perforation (10) ou le porte-outil (8) de l'autre à une position d'élévation (14) - notamment la position la plus élevée - de l'outil de perforation (10) au-dessus du sol (4) est généralement la même, de préférence plus grande, que celle en position de pénétration (13) de l'outil de perforation (10) au sol (4), cette tension de ressort déterminée par le cycle de mouvement étant superposée à la tension de ressort due au pivotement de l'outil de perforation en direction et venant de l'arrêt.

3. Engin de traitement (1) selon la revendication 2, **caractérisé en ce que** le dispositif élastique (17) comporte au moins un ressort à traction, particulièrement un ressort cylindrique à traction (21), qui est tenu en dessous du joint (6) du bras portant (5) du côté du cadre de bâti.

4. Engin de traitement (1) selon l'une des revendications 1 à 3, **caractérisé en ce que** l'élément de réglage de l'angle de perforation consiste en un élément de liaison (25) s'étendant à travers du sens de la marche (18) et pivotant autour d'un axe (26) orienté en la même direction, et étant équipé de balanciers radiaux (28) en vue d'une connexion au levier de commande (15, 15') et comportant une connexion (29) pour un outil de réglage (30) central.

5. Engin de traitement (1) selon l'une des revendications 1 à 4, **caractérisé en ce que** l'outil de réglage (30) peut être commandé tel qu'il agit sur tous les leviers de commande (15, 15') en même temps, particulièrement par un mécanisme manivelle-vis.

6. Engin de traitement (1) selon l'une des revendications 1 à 5, **caractérisé en ce que** l'amortisseur à ressort (36) est réalisé par un ressort (35) arrangé proche de l'outil de réglage (30) tel qu'il agit sur tour les leviers de commande (15, 15') ou axes de réglage (19) en même temps.

7. Engin de traitement (1) selon l'une des revendications 5 ou 6, **caractérisé en ce que** l'amortisseur à ressort (36) est réalisé par un ressort (35) entourant l'hampe de vis (34) de l'outil de réglage (30).

8. Engin de traitement (1) selon l'une des revendications précitées, **caractérisé en ce que** le bras portant (5) de chacun des outils de perforation (10) ou chacun des porte-outils (8) et l'axe de réglage (19, 19') liée pivotante, particulièrement par intermédiaire d'un dispositif de réglage (20), au levier de commande (15) d'un bout et à l'encadrement du bâti de l'autre, sont orienté d'une façon généralement parallèle et que les point d'articulation du bras portant (5) et l'axe de réglage (19, 19') associé forment sensiblement un parallélogramme tel que l'angle de perforation (β) commandé des outils de perforation (10) reste le même pendant le cycle de mouvement (13-14-13) entier par rapport au sol (4).

9. Engin de traitement (1) selon la revendication 8, **caractérisé en ce que** l'axe de réglage est disposé en dessus (19) ou en dessous (19') du bras portant (5) de façon parallèle et que le levier de commande (15) associé est formé avec des bras de levier s'étendant vers le haut et le bas ou avec deux bras de levier (15') de préférence solidaire et s'étendant tous les deux en la même direction.
